# EUROPÄISCHE PATENTSCHRIFT

(11) **EP 2 490 046 B1**
(45) Veröffentlichungstag und Bekanntmachung des Hinweises auf die Patenterteilung: **19.02.2014**
(21) Anmeldenummer: 11192683.8
(22) Anmeldetag: 08.12.2011
(51) Int. Cl.: G01V 8/20

(54) **Optoelektronischer Sensor und Verfahren zur Erfassung von Objekten**
Optoelectronic sensor for the detection of objects and the corresponding method
Capteur optoélectronique et méthode pour la détection d'objets

(30) Priorität: 21.02.2011 DE 102011000855
(43) Veröffentlichungstag der Anmeldung: 22.08.2012
(73) Patentinhaber: Sick AG, 79183 Waldkirch (DE)
(72) Erfinder: Merettig, Gerhard, 79350 Sexau (DE); Waslowski, Kai, 79312 Emmendingen (DE); Hauske, Maximilian, 68165 Mannheim (DE)
(74) Vertreter: Hehl, Ulrich

(56) Entgegenhaltungen:
- DE-A1- 4 035 710
- DE-A1- 19 721 105
- DE-A1-102008 009 180

## Beschreibung

Die Erfindung betrifft einen optoelektronischen Sensor und ein Verfahren zur Erfassung von Objekten nach dem Oberbegriff von Anspruch 1 beziehungsweise 9.

Optoelektronische Sensoren werden sehr häufig zur Anwesenheitsfeststellung von Objekten in einem Überwachungsbereich eingesetzt. Eine Familie innerhalb der optoelektronischen Sensoren stellen die Lichttaster dar. Sie zeichnen sich dadurch aus, dass der Lichtstrahl tastend in den Überwachungsbereich geführt und nur dann in einem Lichtempfänger registriert wird, wenn sich ein Objekt im Überwachungsbereich befindet, an dem der Lichtstrahl zurückgeworfen wird. Anders arbeitet beispielsweise eine Lichtschranke, wo umgekehrt der ständig direkt oder über einen Reflektor auf einen Lichtempfänger gerichtete Lichtstrahl für eine Detektion von einem Objekt unterbrochen wird. Dennoch ist der Grundaufbau eines Lichttasters und einer Reflexionslichtschranke sehr ähnlich, da der Sensor in beiden Fällen einen Lichtstrahl aussendet und den zurückkehrenden Lichtstrahl auswertet.

Es gibt auch innerhalb der Lichttaster unterschiedliche Ausführungen. Ein energetischer Taster bewertet für eine binäre Objektfeststellung die Intensität des Empfängersignals anhand einer Schaltschwelle. Bei einem Triangulationstaster stehen die optischen Achsen von Lichtsender und Lichtempfänger schräg zueinander, und mit Hilfe eines ortsauflösenden Lichtempfängers kann der Winkel gemessen werden, unter dem ein Objekt erfasst wird. Dadurch wird eine Entfernungsbestimmung ermöglicht. Hintergrundausblendende Lichttaster bilden eine Art Hybrid. Wie in einem energetischen Lichttaster wird lediglich ein binäres Objektfeststellungssignal erzeugt und kein Entfernungswert gemessen. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Deren Differenz wird mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen.

Lichttaster weisen aufbaubedingt einen großen Sichtbereich und eine große Empfängermatrix auf. Dadurch sind sie recht empfindlich gegenüber elektromagnetischen Störgrößen, also klassischen kapazitiven oder optischen Einkopplungen auf die Empfängermatrix. Eine ähnliche Situation liegt bei ausrichtfreien Reflexionslichtschranken vor, die anstelle eines Einzelempfängers eine vergrößerte Empfangsmatrix verwenden, um den Empfangslichtstrahl auch bei ungenauer Ausrichtung noch einzufangen.

Diese Problematik hochgradig verrauschter Signale verstärkt sich noch, wenn statt üblicher PIN-Fotodioden CMOS-Schaltkreise mit ihren deutlich höheren Rauschwerten eingesetzt werden. Andererseits sind aber CMOS-Schaltkreise vorteilhaft, um kosten- und flächenminimale Aufbaukonzepte zu verwirklichen und die signalaufnehmende Empfängermatrix mit der nachfolgenden Signalverarbeitung zu integrieren. Dabei könnte zugleich die Pixelzahl und damit die geometrische Auflösung erhöht werden.

Es ist bekannt, zur Verbesserung der Robustheit gegenüber Fremdlicht Strahlcodierungen zu verwenden. In der EP 2 015 110 A1 ist ein optoelektronischer Sensor beschrieben, bei dem das ausgesandte Licht mit einem Pseudozufallsrauschcode moduliert wird. Empfangsseitig ist der Pseudozufallscode bekannt, so dass dort die Sendesequenz wieder decodierbar ist. Dadurch wird in einem Bandspreizverfahren die Sendeenergie spektral verteilt, so dass der Einfluss gerade schmalbandiger Störer vermindert wird. Da es kein negatives Lichtsignal gibt, werden die verwendeten Codesequenzen, die üblicherweise die Werte {-1,1} annehmen, zunächst mit einem Offset beaufschlagt und dann renormiert, so dass die Codesequenz als unipolares Signal mit den Werten {0,1} übertragen werden kann. Außerdem ist eine optische Synchronisation zwischen Sender und Empfänger vorgesehen, bei welcher empfangsseitig ein Maximum der Kreuzkorrelation zwischen dem ihm bekannten Pseudozufallsrauschcode und dem Empfangssignal aufgefunden wird.

In dem optoelektronischen Sensor nach der EP 2 226 650 A1 werden ebenfalls solche mit einem Offset beaufschlagte Pseudozufallssequenzen zur Störungsunterdrückung eingesetzt. Dabei werden fortlaufend die vorliegenden Störungen spektral analysiert und die Codierung dann so angepasst, dass den Störern ausgewichen wird.

Es ist daher Aufgabe der Erfindung, in optoelektronischen Sensoren der eingangs beschriebenen Art die Störanfälligkeit zu reduzieren.

Diese Aufgabe wird durch einen optoelektronischen Sensor und ein Verfahren zur Erfassung von Objekten nach Anspruch 1 beziehungsweise 9 gelöst. Dabei geht die Erfindung von dem Grundgedanken aus, dass das Nutzsignal oder der eigene Lichtfleck des ausgesandten Lichtsignals nur eine vergleichsweise kleine Fläche des Lichtempfängers überdeckt. Nur die tatsächlich signaltragenden Lichtempfangselemente beziehungsweise Pixel eines ortsaufgelösten Lichtempfängers mit einer Vielzahl von zu einer Zeile oder Matrix angeordneter Pixel werden deshalb bestimmt und gezielt der Auswertung zugrunde gelegt. Dazu wird der Sendestrahl codiert. Das empfangene Lichtsignal, welches Lichtanteile des reflektierten oder remittierten Sendestrahls und des Umgebungslichts enthält, wird in jedem Pixel mit der für den Sendestrahl verwendeten Codesequenz korreliert. Nur die Pixel mit einem hohen Nutzsignalanteil zeigen dabei eine signifikante Korrelation. Auf Basis dieser Pixel findet eine Objekterfassung statt, die in einem binären Objekterfassungssignal angezeigt oder an einem Schaltausgang ausgegeben werden kann. Ebenso ist möglich, zusätzliche Informationen, wie den per Triangulation gemessenen Objektabstand oder Eigenschaften der erfassten Objektoberfläche einschließlich deren Kontur, Farbe oder Remissionseigenschaften auszugeben oder anzuzeigen.

Die Erfindung hat den Vorteil, dass durch gezielte Unterdrückung der Signale von Pixeln ohne Nutzsignal das Signal/Rauschverhältnis deutlich verbessert wird. Wegen der geringeren Störempfindlichkeit kann dann auch die Auflösung des Lichtempfängers, also die Anzahl Pixel pro Fläche, erhöht werden. Bei einer Vielzahl von Störungen, wie Rauschen, kapazitiv eingekoppelter elektromagnetischer Störer, Gleichlicht, diffuser Beleuchtung durch Energiesparlampen und weiteren, die näherungsweise auf dem Lichtempfänger gleichverteilt sind, ist die Verbesserung des Signal/Rauschverhältnisses proportional zum Verhältnis der Lichtfleckgröße zur Fläche des Lichtempfängers. Zugleich sinken die Anforderungen an die Auswertungselektronik. Pixel, die kein Nutzlicht empfangen, müssen lediglich erkannt werden, eine weitere Signalverarbeitung hierfür entfällt, und ihr Störanteil wird unmittelbar und vollständig eliminiert. Da somit nur Pixel verbleiben, die einen hohen Nutzanteil enthalten, der in der Regel auch höher ist als das Störsignal, wird eine nachgeordnete Störsignalfilterung etwa zum Entfernen eines Gleichsignalanteils oder hochfrequenter Störgrößen erheblich vereinfacht.

Die Auswertungseinheit ist bevorzugt dafür ausgebildet, diejenigen Pixel auszuwählen, die ein Mindestmaß an Korrelation mit der Codefolge aufweisen. Nur das Einzelempfangssignal von Pixeln, die von dem ausgesandten Lichtsignal oder dessen Reflexion getroffen werden, zeigt eine signifikante Korrelation mit der Codefolge. Bei den übrigen Einzelempfangssignalen entsteht durch Korrelation im Mittel fast kein Signal beziehungsweise ein reines Rauschsignal. Durch Selektion, beispielsweise eine Schwellbewertung, werden diese beiden Klassen von Pixeln unterschieden. Dabei lässt sich die Schwelle so einstellen, dass nur noch ausgewählte Pixel verbleiben, die mindestens teilweise von dem ausgesandten Lichtsignal beaufschlagt sind.

Die Auswertungseinheit ist bevorzugt dafür ausgebildet, diejenigen Pixel auszuwählen, die am stärksten mit der Codefolge korrelieren. Dies ist ein relatives statt eines absoluten Auswahlkriteriums. Dabei kann auch eine feste Anzahl auszuwählender Pixel vorgegeben werden, etwa das am stärksten korrelierte Pixel oder die Gruppe von vier, neun oder andere Anzahlen der am stärksten korrelierten Pixel. Es ist möglich, diese Anzahl an die erwartete Größe des Lichtfleck des Nutzsignals anzupassen.

Die Auswertungseinheit ist bevorzugt dafür ausgebildet, die Auswahl von Pixeln um Nachbarn der ursprünglich ausgewählten Pixel zu erweitern. Solche benachbarten Pixel haben im ersten Schritt das Korrelationskriterium nicht erfüllt. Dennoch ist hier zumindest noch ein geringfügiger Nutzanteil zu erwarten, der durch die Einbeziehung dieser Pixel in die Auswertung einfließt.

Die Auswertungseinheit ist bevorzugt dafür ausgebildet, die Einzelempfangssignale der ausgewählten Pixel zu mindestens einem Gesamtempfangssignal zusammenzufassen und das Gesamtempfangssignal, insbesondere nach analoger oder digitaler Aufbereitung, zu bewerten, um festzustellen, ob ein Objekt in dem Überwachungsbereich des Sensors erfasst ist. Dabei entstehen ein oder mehrere Auswertungskanäle. Eine Möglichkeit, die Einzelempfangssignale zusammenzufassen, besteht in einer Addition der Einzelempfangssignale. Nur das Gesamtempfangssignal muss anschließend noch betrachtet werden, so dass sich der Aufwand für eine nachgeordnete analoge oder digitale Filterung und Signalaufbereitung erheblich reduziert. Außerdem ist durch das Aussortieren derjenigen Pixel, die kein Nutzsignal empfangen haben, das Signal/Rauschverhältnis des Gesamtempfangssignals von vorneherein erheblich verbessert und damit die Signalaufbereitung erleichtert.

Die Codefolge ist bevorzugt eine Pseudozufallsfolge. Isoliert betrachtet zeigt damit das ausgesandte Lichtsignal das gleiche Verhalten wie ein weißes Rauschen. Auch nach Korrelation mit einem Rauschsignal, wie es ein Pixel außerhalb des Empfangslichtflecks registriert, bleibt nur ein Rauschsignal übrig. Nur bei Korrelation der ausgesandten Codefolge mit sich selbst in den Pixeln, auf die der Empfangslichtfleck fällt, entsteht ein ausgeprägtes Korrelationssignal, an dem diese Pixel erfindungsgemäß erkannt werden. Es sind verschiedene geeignete Pseudozufallsfolgen bekannt, wie sie auch beispielhaft in der EP 2 015 110 A1, oder in der DE 10 2008 009 180 A1 genannt werden, auf die zu allgemeinen Merkmalen eines optoelektronischen Sensors mit Pseudozufallszahlcodierung ergänzend verwiesen wird, etwa M-Sequenzen, Gold-Sequenzen, Kasami-Sequenzen, Hadamard-Walsh-Sequenzen oder Barker-Sequenzen. Wie in der EP 2 015 110 A1 wird auch erfindungsgemäß vorzugsweise ein Wertebereich [-1;1] der Pseudozufallsfolge verwendet, der durch Addition eines Offsets und Renormierung für das unipolare Lichtsignal auf einen Wertebereich [0;1] transformiert wird.

Die Codefolge kann auch abwechselnd eine Pseudozufallsfolge und eine Pause aufweisen, in welcher der Lichtsender kein Signal abstrahlt. Dadurch wird das Signal/Rauschverhältnis gegenüber weißem Rauschen verbessert.

Alternativ zu einer festen Pseudozufallsfolge ist auch denkbar, dass mehrere Pseudozufallsfolgen hinterlegt sind, von denen zur Erhöhung der Robustheit jeweils eine für die Modulation des ausgesandten Lichtsignals verwendet ist. Diese mehreren Pseudozufallszahlen können prinzipiell auch durch unterschiedliche Startwerte desselben Pseudozufallszahlalgorithmus' erzeugt werden.

Die Schaltlogik der Auswertungseinheit für die Korrelation der Einzelempfangssignale mit der Codefolge ist bevorzugt jeweils in die Pixel des Lichtempfängers integriert. Solche auch als "smart pixel" bezeichneten Lichtempfangselemente führen zu einer besonders kostengünstigen und kompakten Bauweise. Außerdem sind wegen der kurzen Signalwege durch Korrelation direkt am Pixel die Dynamikanforderungen an die Schaltung vergleichsweise gering. Auch das Auswahlkriterium, also beispielweise eine Schwellbewertung, kann direkt in die Pixel integriert sein. Dem Lichtempfänger nachgeordnete Elemente erhalten dann unmittelbar nur noch solche Einzelempfangssignale, die einen hohen Nutzsignalanteil aufweisen und die lediglich noch aufaddiert werden, wobei wahlweise auch diese Zusammenführung zu mindestens einem Gesamtempfangssignal noch auf dem Lichtempfänger implementiert sein kann.

Der Lichtempfänger ist bevorzugt auf einem CMOS-Chip integriert. Dies vereinfacht die Ausführung der Pixelauswahl als smart pixel. Das vergleichsweise höhere Rauschen von auf CMOS-Chips integrierten Lichtempfängern wird durch die Pixelselektion überkompensiert.

Die Schaltlogik für die Pixelkorrelation ist bevorzugt ein analoger Schaltkreis. Das ist einfach und kostengünstig, besonders bei Integration der Schaltlogik in smart pixel. Alternativ ist aber auch eine digitale Auswertung denkbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Sensors;
- Fig. 2: eine Blockdarstellung des Signalflusses in dem Sensor gemäß Figur 1;
- Fig. 3: eine Darstellung einer Pixelmatrix eines Lichtempfängers in dem Sensor gemäß Figur 1 mit beispielhaften Signalen zur Erläuterung der erfindungsgemäßen Pixelauswahl durch Korrelation mit einer Sendecodierung.

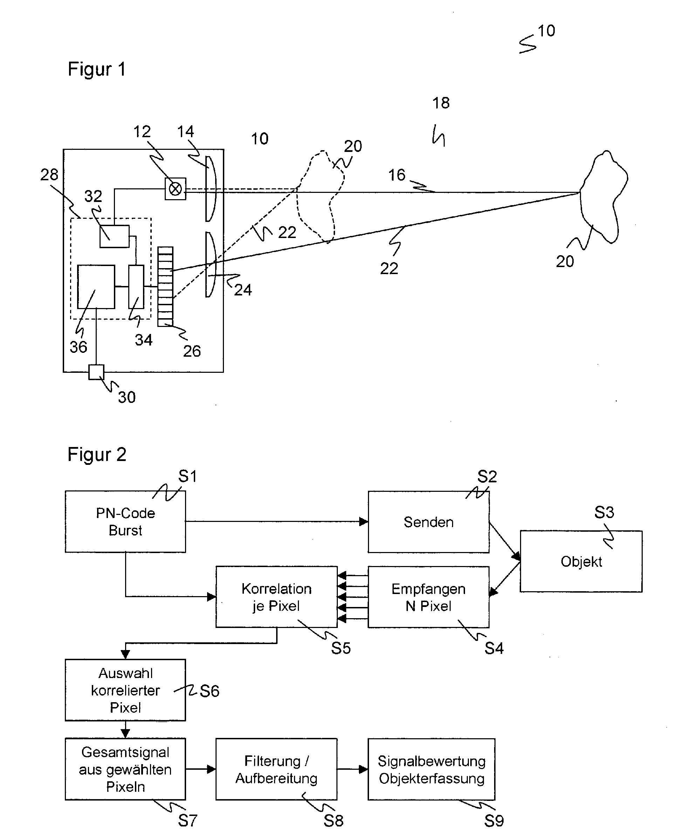

Figur 1 zeigt eine schematische Schnittdarstellung eines optoelektronischen Sensors 10 in einer Ausführung als Triangulationslichttaster. Die Erfindung wird anhand dieses Triangulationstasters erläutert. Sie ist aber darauf nicht beschränkt, sondern kann bei jedem Sensor mit aktiver Beleuchtung durch Sendelicht und einem pixelaufgelösten Lichtempfänger eingesetzt werden. Dazu zählen insbesondere die einleitend genannten verschiedenen Lichttaster, wie triangulierende, energetische oder hintergrundausblendende Lichttaster, aber auch ausrichtfreie Einweg- oder Reflexionslichtschranken. Alle diese Sensoren können durch parallele Mehrfachausführung zu einem Lichtgitter erweitert werden.

In dem Sensor 10 sendet ein Lichtsender 12 beispielsweise mit einer LED- oder Laserlichtquelle über eine strahlformenden Sendeoptik 14 ein Lichtsignal 16 in einen Überwachungsbereich 18 aus. Fällt das Lichtsignal 16 auf ein Objekt 20, so gelangt ein Teil des Sendelichts als remittiertes oder reflektiertes Empfangslicht 22 zurück zu dem Sensor 10. Eine Empfangsoptik 24 fängt dieses Empfangslicht 22 auf und leitet es auf einen Lichtempfänger 26 mit einer Vielzahl von zu einer Zeile oder Matrix angeordneten einzelnen Lichtempfangselementen beziehungsweise Pixeln vorzugsweise in CMOS-Technologie, die das jeweils auf das Pixel fallende Empfangslicht 22 in ein elektrisches Empfangssignal umwandeln.

Aufgrund des Versatzes zwischen Lichtsender 12 mit Sendeoptik 14 gegenüber dem Lichtempfänger 26 mit Empfangsoptik 24 und wegen der Anordnung der einzelnen Pixel des Lichtempfängers 26 längs der Querverbindung zwischen Lichtsender 12 und Lichtempfänger 26 fällt das Empfangslicht 22 eines mit gestrichelten Linien dargestellten nahen Objekts 20 auf andere Pixel als das Empfangslicht 22 eines mit durchgezogenen Linien dargestellten fernen Objekts 20. Diese Information der Lage auf dem Lichtempfänger 26 kann für eine Triangulation des Objektabstands oder eine Hintergrundausblendung verwendet werden.

Eine als Ganzes mit einem gestrichelten Rechteck 28 dargestellte Auswertungseinheit übernimmt zugleich die Steuerungsaufgaben in dem Sensor 10. Die Auswertungseinheit 28 ist mit dem Lichtempfänger 26 verbunden, um aus den elektrischen Empfangssignalen je nach Anwesenheit eines Objekts 20 ein Objektfeststellungssignal zu bestimmen, das an einem Schaltausgang 30 ausgegeben wird. Alternativ können auch weitere Informationen über das Objekt 20 gewonnen und ausgegeben werden, wie Objektabstand, -kontur, Farbe oder Remission.

Die Auswertungseinheit 28 umfasst eine Codebereitstellungseinheit 32 zur Ausgabe einer wohldefinierten Pseudozufallssequenz, die einerseits mit dem Lichtsender 12 zum Aufmodulieren der Pseudozufallssequenz auf das ausgesandte Lichtsignal 16 und andererseits mit einem Korrelator 34 zur Korrelation der elektrischen Empfangssignale mit der Pseudozufallssequenz verbunden ist. Mit dem Korrelator 34 ist außerdem eine Signalverarbeitungseinheit 36 verbunden, um von dem Korrelator 34 ausgegebene Empfangssignale aufzubereiten und auf die Erfassung von Objekten auszuwerten. Alternativ zur Darstellung gemäß Figur 1 kann der Korrelator 34 in den Lichtempfänger 26 integriert sein, indem in jedem Pixel eine eigene analoge Korrelatorschaltung vorgesehen ist.

Figur 2 zeigt den Signalfluss in dem Sensor 10 in einer Blockdarstellung. Bei S1 wird in der Codebereitstellungseinheit 32 ein Pseudozufallscode (Pseudo Noise, PN-Sequenz) erzeugt oder aus einem Speicher ausgelesen. Der Pseudozufallscode wird auf das Sendesignal aufmoduliert. Bei einem Pseudozufallscode mit Wertebereich [0;1] bedeutet dies, dass jeweils Pulse einer definierten Dauer und Amplitude eine "1" und entsprechende Pulspausen eine "0" codieren. Das Sendesignal mit dem Pseudozufallscode wird bei S2 von dem Lichtsender 12 als Lichtsignal 16 in den Überwachungsbereich 18 ausgesandt. Nach Remission oder Reflexion an einem Objekt 20 bei S3 empfangen die Pixel des Lichtempfängers 26 bei S4 das Empfangslicht 22 und erzeugen eine der Anzahl der Pixel entsprechende Anzahl von Einzelempfangssignalen.

Wie in Figur 2 durch mehrere Pfeile angedeutet, wird die Vielzahl von Einzelempfangssignalen bei S5 von dem Lichtempfänger 26 an den Korrelator 34 übergeben. Als zweite Eingangsgröße für die Korrelation wird dem Korrelator 34 von der Codebereitstellungseinheit 32 der beim Senden verwendete Pseudozufallscode übergeben. Für jedes Pixel wird die Korrelationsfunktion des Einzelempfangssignals und des Pseudozufallscodes erzeugt.

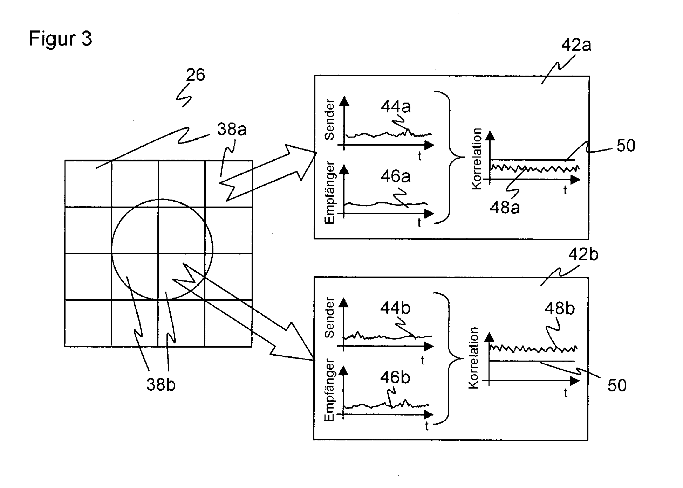

Auf Basis des Korrelationsergebnisses erfolgt bei S6 eine Auswahl von relevanten Pixeln. Dieser Schritt ist in Figur 3 illustriert. Die linke Seite der Darstellung ist eine Draufsicht auf hier beispielhaft sechzehn zu einer Matrix angeordnete Pixeln des Lichtempfängers 26. Ein Lichtfleck 40 des Empfangslichts 22 überdeckt nur einen Teil der Pixel. Ziel der Pixelauswahl ist, diese Pixel zu finden, da die übrigen Pixel lediglich Rauschsignale liefern und damit die Auswertung nur erschweren.

Für die rechte Seite der Darstellung von Figur 3 sind zwei Pixel 38a-b herausgegriffen und in zwei Fenstern 42a-b die zu korrelierenden Signale, nämlich das mit dem Pseudozufallscode modulierte Sendesignal 44a-b und das jeweilige Einzelempfangssignal 46a-b sowie das Korrelationsergebnis 48a-b gezeigt. Aufgrund der Zufallsstruktur des Pseudozufallscodes erscheinen Sendesignal 44a-b und Einzelempfangssignal 46a-b zunächst als Rauschen, und zwar unabhängig davon, ob der Lichtfleck 40 ein Pixel trifft oder nicht.

Wie in dem Fenster 42a zu einem Pixel 38a gezeigt, der nicht von dem Lichtfleck 40 getroffen wird, ist auch das Korrelationsergebnis 48a lediglich ein Rauschsignal. Alle mit dem Pseudozufallscode unkorrelierten Störungen erzeugen im Mittel nahezu kein Signal.

Bei einem Pixel 38b dagegen, welches von dem Lichtfleck 40 getroffen wird, entsteht in dem Korrelationsergebnis 48b ein ausgeprägtes Korrelationssignal. Sendesignal 44b und Einzelempfangssignal 46b enthalten nämlich dieselbe Pseudozufallsfolge und sind einander deshalb hochgradig ähnlich.

Die Korrelationsergebnisse 48a-b werden mit einer Schwelle 50 bewertet. Dabei ist die Schwelle so eingestellt, dass alle Störgrößen den Schwellwert zumindest im Mittel nicht überschreiten. Ein nennenswerter oberschwelliger Signalanteil entsteht nur bei Pixeln 38b unter dem Lichtfleck 40, die von dem Empfangslicht 22 getroffen werden. Nur solche Pixel 38b und gegebenenfalls noch deren Nachbarn zur Berücksichtigung von deren verbleibendem Nutzanteil werden als relevant ausgewählt.

Wenn der Lichtfleck 40 nur einen kleinen Teil der Pixel 38b überdeckt, sind nur eine entsprechend kleine Anzahl von Pixeln 38b relevant. Alle übrigen Pixel 38a, deren Einzelempfangssignal ohnehin nur Rauschen oder Störungen enthält, werden ignoriert.

Die Schwellbewertung mit einer festen, an den zu erwartenden Pegel in einem nicht korrelierten Pixel 38a angepassten Schwelle 50 ist nur eine beispielhafte Möglichkeit der Pixelauswahl. Stattdessen kann beispielsweise eine feste Anzahl von zu selektierenden Pixeln 38b vorgegeben werden, und es findet ein relativer Vergleich der Korrelationsergebnisse 48a-b statt, mit dem diejenigen Pixel aufgefunden werden, die am stärksten vom reinen Rauschsignal 48a eines nicht vom Lichtfleck 40 getroffenen Pixel abweichen.

Zurück zu Figur 2, werden bei S7 die Einzelempfangssignale der ausgewählten Pixel zu einem Gesamtsignal zusammengefasst. Statt alle ausgewählten Pixel zu einem einzigen Gesamtsignal zusammenzufassen, können auch mehrere Kanäle aus unterschiedlichen, überlappenden oder überschneidungsfreien Teilmengen von ausgewählten Pixeln gebildet werden, in denen jeweils die Einzelempfangssignale aufaddiert und dann getrennt ausgewertet werden.

Das Gesamtsignal wird dann bei S8 in der Signalverarbeitungseinheit 36 digital oder analog aufbereitet. Dazu werden beispielsweise analoge oder digitale Filter verwendet, um das Signal/Rauschverhältnis weiter zu verbessern, interessierende Spektralbereiche zu selektieren oder dergleichen. Bei S9 erfolgt dann die eigentliche Objekterkennung, bei der das aufbereitete Gesamtsignal untersucht wird, um ein binäres Objektfeststellungssignal zu generieren, den Objektabstand aus der Position des Lichtflecks 40 auf dem Lichtempfänger 26 zu bestimmen oder Informationen über Farbe oder Remission des Objekts 20 zu gewinnen und auszugeben.

## Patentansprüche

1. Optoelektronischer Sensor (10) zur Erfassung von Objekten (20) mit einem Lichtsender (12) zum Aussenden eines mit einer Codefolge (44) modulierten Lichtsignals (16), einem Lichtempfänger (26) zum Erzeugen eines Empfangs-signals aus dem empfangenen Lichtsignal (22) und einer Auswertungseinheit (28, 34), in der das Empfangssignal mit der zur Modulation des ausgesandten Lichtsignals (16) verwendeten Codefolge (44) korreliert wird,
**dadurch gekennzeichnet,**
**dass** der Lichtempfänger (26) eine Vielzahl von Pixeln (38) zur Erzeugung eines jeweiligen Einzelempfangssignals (46) aus dem empfangenen Lichtsignal (22) aufweist und dass die Auswertungseinheit (28, 34) dafür ausgebildet ist, die Einzelempfangssignale (46) jeweils einzeln mit der Codefolge (44) zu korrelieren und daraufhin auf Basis des Korrelationsergebnisses eine Auswahl von Pixeln (38b) zu treffen, deren Einzelempfangssignale (46b) der Objekterfassung zugrunde gelegt werden.

2. Sensor (10) nach Anspruch 1,
wobei die Auswertungseinheit (28, 34) dafür ausgebildet ist, diejenigen Pixel (38) auszuwählen, die ein Mindestmaß an Korrelation mit der Codefolge (44) aufweisen, insbesondere durch eine Schwellbewertung (50).

3. Sensor (10) nach einem der vorhergehenden Ansprüche,
wobei die Auswertungseinheit (28, 34) dafür ausgebildet ist, diejenigen Pixel (38) auszuwählen, die am stärksten mit der Codefolge (44) korrelieren.

4. Sensor (10) nach einem der vorhergehenden Ansprüche,
wobei die Auswertungseinheit (28, 34, 36) dafür ausgebildet ist, die Auswahl von Pixeln (38) um Nachbarn der ursprünglich ausgewählten Pixel (38) zu erweitern.

5. Sensor (10) nach einem der vorhergehenden Ansprüche,
wobei die Auswertungseinheit (28, 34, 36) dafür ausgebildet ist, die Einzelempfangssignale (46) der ausgewählten Pixel (36) zu mindestens einem Gesamtempfangssignal zusammenzufassen und das Gesamtempfangssignal, insbesondere nach analoger oder digitaler Aufbereitung, zu bewerten, um festzustellen, ob ein Objekt erfasst ist.

6. Sensor (10) nach einem der vorhergehenden Ansprüche,
wobei die Codefolge (46) eine Pseudozufallsfolge ist, oder wobei die Codefolge (46) abwechselnd eine Pseudozufallsfolge und eine Pause aufweist, oder wobei mehrere Pseudozufallsfolgen vorgesehen sind, von denen jeweils eine Pseudozufallsfolge für die Codefolge (46) verwendet ist.

7. Sensor (10) nach einem der vorhergehenden Ansprüche,
wobei die Schaltlogik der Auswertungseinheit (28, 34) für die Korrelation der Einzelempfangssignale (46) mit der Codefolge (44) jeweils in die Pixel (38) des Lichtempfängers (26) integriert ist.

8. Sensor (10) nach einem der vorhergehenden Ansprüche,
wobei der Lichtempfänger (26) auf einem CMOS-Chip integriert und/oder die Schaltlogik (34, 36) ein analoger Schaltkreis ist.

9. Verfahren zur Erfassung von Objekten (20), bei dem ein mit einer Codefolge (44), insbesondere einer Pseudozufallscodefolge, moduliertes Lichtsignal (16) ausgesandt und das empfangene Lichtsignal (22) in ein Empfangssignal umgewandelt wird, wobei das Empfangssignal mit der zur Modulation des ausgesandten Lichtsignals (16) verwendeten Codefolge (44) korreliert wird, **dadurch gekennzeichnet,**
**dass** aus dem empfangenen Lichtsignal (22) in einer Vielzahl von Pixeln (38) jeweilige Einzelempfangssignale (46) erzeugt und jeweils einzeln mit der Codefolge (44) korreliert werden, und dass daraufhin auf Basis des Korrelationsergebnisses eine Auswahl von Pixeln (38b) getroffen wird, deren Einzelempfangssignale (46b) der Objekterfassung zugrunde gelegt werden.

10. Verfahren nach Anspruch 9,
wobei diejenigen Pixel (38b) ausgewählt werden, die ein Mindestmaß an Korrelation mit der Codefolge (44) aufweisen oder die am stärksten mit der Codefolge (44) korrelieren, und wobei die Einzelempfangssignale (46b) der ausgewählten Pixel (38b) zu mindestens einem Gesamtempfangssignal zusammengefasst und das Gesamtempfangssignal für die Objekterfassung bewertet wird.

## Claims

1. An optoelectronic sensor (10) for the detection of objects (20) having a light transmitter (12) for transmitting a light signal (16) modulated with a code sequence (44), a light receiver (26) for generating a reception signal from the received light signal (22), and an evaluation unit (28, 34) wherein the reception signal is correlated with the code sequence (44) used for the modulation of the transmitted light signal (16),
**characterized in that** the light receiver (26) comprises a plurality of pixels (38) for generating a respective individual reception signal (46) from the received light signal (22) and **in that** the evaluation unit (28, 34) is configured to individually correlate the individual reception signals (46) with the code sequence (44) and to subsequently make a selection of pixels (38b) whose individual reception signals (46b) are used for the object detection based on the correlation result.

2. The sensor (10) according to claim 1,
wherein the evaluation unit (28, 34) is configured to select those pixels (38) comprising a minimal correlation with the code sequence (44), in particular by means of a threshold evaluation (50).

3. The sensor (10) according to one of the preceding claims,
wherein the evaluation unit (28, 34) is configured to select those pixels (38) having the strongest correlation with the code sequence (44).

4. The sensor (10) according to one of the preceding claims,
wherein the evaluation unit (28, 34, 36) is configured to enlarge the selection of pixels (38) with neighbors of the originally selected pixels (38).

5. The sensor (10) according to one of the preceding claims,
wherein the evaluation unit (28, 34, 36) is configured to combine the individual reception signals (46) of the selected pixels (36) into at least one common reception signal and to evaluate the common reception signal, in particular after an analog or digital preprocessing, to determine whether an object is detected.

6. The sensor (10) according to one of the preceding claims,
wherein the code sequence (46) is a pseudo random sequence, or wherein the code sequence (46) alternately comprises a pseudo random sequence and a break, or wherein a plurality of pseudo random sequences is provided and one of the pseudo random sequences is respectively used for the code sequence (46).

7. The sensor (10) according to one of the preceding claims,
wherein the circuitry of the evaluation unit (28, 34) for the correlation of the individual reception signals (46) with the code sequence (44) is respectively integrated into the pixels (38) of the light receiver (26).

8. The sensor (10) according to one of the preceding claims,
wherein the light receiver (26) is integrated on a CMOS-Chip and/or the circuitry (34, 36) is an analog circuit.

9. A method for the detection of objects (20), wherein a light signal (16) modulated with a code sequence (44), in particular a pseudo random code sequence, is transmitted and the received light signal (22) is converted into a reception signal, wherein the reception signal is correlated with the code sequence (44) used for the modulation of the transmitted light signal (16),
**characterized in that** respective individual reception signals (46) are generated from the received light signal (22) in a plurality of pixels (38) and are individually correlated with the code sequence (44), and **in that** subsequently, based on the correlation result, a selection of pixels (38b) is made whose individual reception signals (46b) are used for the object detection.

10. The method according to claim 9,
wherein those pixels (38b) are selected comprising a minimal correlation with the code sequence (44) or having the strongest correlation with the code sequence (44), and wherein the individual reception signals (46b) of the selected pixels (38b) are combined into at least one common reception signal, and the common reception signal is evaluated for the object detection.

## Revendications

1. Capteur optoélectronique (10) pour la détection d'objets (20), comprenant un émetteur de lumière (12) pour émettre un signal lumineux (16) modulé avec une succession codée (44), un récepteur de lumière (26) pour engendrer un signal de réception à partir du signal lumineux reçu (22), et une unité d'évaluation (28, 34) dans laquelle le signal de réception est mis en corrélation avec la succession codée (44) utilisée pour la modulation du signal lumineux émis (16),
**caractérisé en ce que**
le récepteur de lumière (26) comporte une pluralité de pixels (38) pour engendrer un signal de réception individuel respectif (46) à partir du signal lumineux reçu (22), et **en ce que** l'unité d'évaluation (28, 34) est réalisée pour mettre les signaux de réception individuels (46) en corrélation respectivement individuellement avec la succession codée (44) et pour procéder ensuite, sur la base du résultat de corrélation, à une sélection de pixels (38b) dont les signaux de réception individuels (46b) sont exploités pour la détection d'objets.

2. Capteur (10) selon la revendication 1,
dans lequel l'unité d'évaluation (28, 34) est réalisée pour sélectionner ceux des pixels (38) qui présentent un degré minimal de corrélation avec la succession codée (44), en particulier par une estimation de seuil (50).

3. Capteur (10) selon l'une des revendications précédentes,
dans lequel l'unité d'évaluation (28, 34) est réalisée pour sélectionner ceux des pixels (38) qui présentent la corrélation la plus forte avec la succession codée (44).

4. Capteur (10) selon l'une des revendications précédentes,
dans lequel l'unité d'évaluation (28, 34, 36) est réalisée pour élargir la sélection de pixels (38) aux voisins du pixel (38) sélectionné à l'origine.

5. Capteur (10) selon l'une des revendications précédentes,
dans lequel l'unité d'évaluation (28, 34, 36) est réalisée pour regrouper les signaux de réception individuels (46) des pixels sélectionnés (36) pour donner au moins un signal de réception global, et pour évaluer le signal de réception global, en particulier après préparation analogique ou numérique, pour constater si un objet est détecté.

6. Capteur (10) selon l'une des revendications précédentes,
dans lequel la succession codée (46) est une succession pseudo-aléatoire, ou dans lequel la succession codée (46) comporte en alternance une succession pseudo-aléatoire et une pause, ou dans lequel il est prévu plusieurs successions pseudo-aléatoires, parmi lesquelles une succession pseudo-aléatoire respective est utilisée pour la succession codée (46).

7. Capteur (10) selon l'une des revendications précédentes,
dans lequel le système logique de commutation de l'unité d'évaluation (28, 34) pour la corrélation des signaux de réception individuels (46) avec la succession codée (44) est intégré respectivement dans les pixels (38) du récepteur de lumière (26).

8. Capteur (10) selon l'une des revendications précédentes,
dans lequel le récepteur de lumière (26) est intégré sur une puce en technologie CMOS, et/ou en ce que le système logique de commutation (34, 36) est un circuit de commutation analogique.

9. Procédé pour la détection d'objets (20), dans lequel un signal lumineux (16) modulé avec une succession codée (44), en particulier une succession codée pseudo-aléatoire, est émis et le signal lumineux reçu (22) est converti en un signal de réception, tel que le signal de réception est mis en corrélation avec la succession codée (44) utilisée pour la modulation du signal lumineux émis (16),
**caractérisé en ce que**
on engendre à partir du signal lumineux reçu (22) dans une pluralité de pixels (38) des signaux de réception individuels respectifs (46) et on les met respectivement individuellement en corrélation avec la succession codée (44), et **en ce que** l'on procède ensuite, sur la base du résultat de corrélation, à une sélection de pixels (38b) dont les signaux de réception individuels (46b) sont exploités pour la détection d'objets.

10. Procédé selon la revendication 9,
dans lequel on sélectionne ceux des pixels (38b) qui présentent un degré minimum de corrélation avec la succession codée (44), ou qui présentent la corrélation la plus forte avec la succession codée (44), et dans lequel les signaux de réception individuels (46b) des pixels sélectionnés (38b) sont regroupés pour donner au moins un signal de réception global, et le signal de réception global est estimé pour la détection d'objets.
